# EUROPÄISCHE PATENTSCHRIFT

(11) **EP 3 027 488 B1**
(45) Veröffentlichungstag und Bekanntmachung des Hinweises auf die Patenterteilung: **10.04.2019**
(21) Anmeldenummer: 14741576.4
(22) Anmeldetag: 16.07.2014
(51) Int. Cl.: B62D 21/15, B62D 25/02, B62D 29/04

(54) **KAROSSERIE EINES FAHRZEUGS MIT EINEM KAROSSERIEBAUTEIL AUS FASERVERSTÄRKTEM KUNSTSTOFF**
BODY OF A VEHICLE HAVING A BODY COMPONENT MADE OF FIBER-REINFORCED PLASTIC
CARROSSERIE DE VÉHICULE COMPRENANT UN ÉLÉMENT DE CARROSSERIE EN MATIÈRE PLASTIQUE RENFORCÉE DE FIBRES

(30) Priorität: 29.07.2013 DE 102013214772
(43) Veröffentlichungstag der Anmeldung: 08.06.2016
(73) Patentinhaber: Bayerische Motoren Werke Aktiengesellschaft, 80809 München (DE)
(72) Erfinder: BEIL, Andreas, 80935 München (DE); SCHNAUFER, Thomas, 82386 Oberhausen (DE); SPITZER, Simon, 80339 München (DE)
(86) Internationale Anmeldenummer: PCT/EP2014/065293
(87) Internationale Veröffentlichungsnummer: WO 2015/014620

(56) Entgegenhaltungen:
- EP-A1- 0 978 442
- EP-A2- 1 197 398
- DE-A1- 10 352 725
- DE-A1-102004 021 165
- DE-A1-102005 050 959
- DE-A1-102009 015 355
- DE-A1-102009 024 829
- DE-A1-102010 053 958
- JP-A- H07 277 222
- US-B1- 6 296 298

## Beschreibung

Die Erfindung betrifft eine Karosserie eines Fahrzeugs mit mindestens einem Karosseriebauteil aus faserverstärktem Kunststoff. Ferner betrifft die Erfindung eine Verwendung eines Deformationselements an einer solchen Karosserie.

Bei Fahrzeugkonzepten mit einer Karosserie aus faserverstärktem Kunststoff werden Monocoque-Konstruktionen mit massiven Schwellerprofilen aus faserverstärktem Kunststoff verwendet. Diese Schwellerprofile lassen jedoch keine plastische Krafteinleitung zu. Bei hoher Krafteinwirkung brechen bzw. splittern sie weitgehend undefiniert. Solche Schwellerprofile werden daher allein für einen vergleichsweise sehr kleinen elastischen Bereich von deren faserverstärktem Kunststoff als Werkstoff ausgelegt. Alternativ ist es bekannt, solche Schwellerprofile mit Schäumen zu füllen. Diese Schäume weisen aber ein vergleichsweise hohes Raumgewicht auf.

Aus der DE 10 2010 053 958 A1 ist bereits eine Karosserie eines Fahrzeugs mit mindestens einem Karosseriebauteil aus einem faserverstärkten Kunststoff bekannt.

Erfindungsgemäß ist eine Karosserie eines Fahrzeugs mit mindestens einem Karosseriebauteil aus faserverstärktem Kunststoff geschaffen, bei der in Hauptfahrtrichtung des Fahrzeugs vor dem Karosseriebauteil ein insbesondere duktiles Deformationselement angeordnet ist. Alternativ oder zusätzlich ist erfindungsgemäß in Hauptfahrtrichtung des Fahrzeugs hinter dem Karosseriebauteil ein insbesondere duktiles Deformationselement angeordnet.

Die erfindungsgemäße Lösung nutzt teilweise Erkenntnisse aus konventionellen Fahrzeugkonzepten mit einer Karosserie aus Stahl. An solchen Stahlkarosserien werden Deformationselemente in den Lastpfad von Trägern oder Schwellern dadurch integriert, dass diese Träger oder Schweller in bestimmten Bereichen gezielt duktil ausgestaltet sind. Dazu werden in der Regel im Lastpfad unterschiedliche Querschnittsformen, unterschiedliche Materialstärken oder auch unterschiedliche Materialien verwendet.

Gemäß der Erfindung wird mindestens ein Deformationselement gezielt in Hauptfahrtrichtung vor und/oder hinter einem Karosseriebauteil aus faserverstärktem Kunststoff angeordnet. Dadurch wird erreicht, dass bei einem Frontal- oder Heckaufprall am Fahrzeug zunächst das erfindungsgemäße Deformationselement einer Stauchung unterzogen wird, bevor der Kraftfluss dann weiter auf das jeweilige Karosseriebauteil selbst übergeht. Das derartige System ist entsprechend einfach zu konstruieren, einfach zu simulieren, einfach herzustellen und im Schadensfall auch einfach zu reparieren. Es muss lediglich für den jeweiligen Lastfall ein passendes Deformationselement ermittelt und verbaut werden. Da das erfindungsgemäße Deformationselement gezielt vor und/oder hinter einem Karosseriebauteil, und nicht etwa in dessen Mitte, angeordnet ist, ergibt sich nur eine Kontaktfläche als Verbindungsfläche. Damit kann die Anbringung des erfindungsgemäßen Deformationselements einfach und kostengünstig von statten gehen und das Deformationselement ist auch nach einem Schadensfall gut zugänglich. Aufgrund kleiner Kontaktflächen können auch Korrosionsprobleme gering gehalten werden.

Als Deformationselement wird dabei ein Bauteil bzw. eine Bauteilstruktur verstanden, die gezielt erheblich duktiler bzw. mit einer größeren Duktilität gestaltet ist, als ein Bauteil aus faserverstärktem Kunststoff. Duktilität ist die Eigenschaft eines Materials bzw. Werkstoffs, sich unter Belastung plastisch zu verformen, bevor er versagt. Beispielsweise bricht Glas ohne erkennbare Verformung. Stahl hingegen kann sich um mehr als 25 % plastisch verformen (je nach Stahlsorte), bevor er reißt. Gold ist so duktil, dass es sich auf eine Dicke von wenigen Atomlagen austreiben lässt. Entsprechend unterscheidet man beim weggesteuerten Versagen eines Materials zwischen einem Sprödbruch, einem duktilen Bruch und einem vollständig duktilen Bruch.

Mit der erfindungsgemäßen Lösung ist diese Materialeigenschaft eines weggesteuerten Versagens eines Deformationselements gezielt vor und/oder hinter einem Karosseriebauteil aus faserverstärktem Kunststoff positioniert, um dort gezielt einen örtlich begrenzten Bereich einer Verformung im Falle eines Lasteintrags zu gestalten. Somit kann sich die Karosserie des erfindungsgemäßen Fahrzeugs im Falle eines Unfalls vor und/oder hinter deren Karosseriebauteil aus faserverstärktem Kunststoff plastisch verformen.

Duktile Werkstoffe sind auch gut kalt formbar, z. B. durch Tiefziehen, Biegen oder Recken. Diese Eigenschaft kann erfindungsgemäß vorteilhaft genutzt werden, um das duktile Verformungselement gezielt an seine kraftaufnehmende Funktion während eines Lasteintrags anzupassen. So können insbesondere vorteilhaft Rippen und Sicken an dem Verformungselement ausgebildet sein, die dann bei Lasteintrag verformt werden.

Das Deformationselement ist ferner mit einer Wabenstruktur gestaltet. Eine solche Wabenstruktur kann aus thermoplastischem Kunststoff besonders vorteilhaft mittels Spritzgießen hergestellt werden. Sie weist ein geringes Raumgewicht bei zugleich hoher Festigkeit und hoher Energieadsorption bei einer aufprallbedingten Verformung auf.

Dabei ist die Wabenstruktur mit Wabenwänden gestaltet, die in Hauptfahrtrichtung ausgerichtet sind. Derart ausgerichtete Wabenwände stellen einem Lasteintrag in Hauptfahrtrichtung eine hohe Stützkraft entgegen.

Das erfindungsgemäße, duktile Verformungselement ist nicht aus faserverstärktem Kunststoff, sondern insbesondere mit Kunststoff und/oder Metall gebildet. Diese Materialien weisen ein erfindungsgemäß besonders vorteilhaftes duktiles Verhalten auf und sind ferner vorteilhaft dazu geeignet, großflächig an dem Karosseriebauteil aus faserverstärktem Kunststoff angebunden, insbesondere angeklebt zu werden. Das Deformationselement gemäß der Erfindung ist ferner vorteilhaft an dem Karosseriebauteil flächig verklebt. Mit einer derartigen Verklebung kann sichergestellt werden, dass bei einem unfallbedingten Lasteintrag das Deformationselement nicht etwa von dem Karosseriebauteil abgeschert wird, zu dessen Schutz es vorgesehen ist.

Bevorzugt ist dabei die Kontaktfläche des Deformationselements am Karosseriebauteil zur Hauptfahrtrichtung schräg gestellt. Bei einer derart schräg gestellten Kontaktfläche ist die dort vorgesehene Kleberschicht im Lastfall auf Scherung beansprucht, was sich sehr vorteilhaft auf die mit der Kleberschicht übertragbaren Kräfte auswirkt. Ferner trägt mit der Scherbelastung und der sich dabei ergebenden (zumindest geringen) Relativbewegung der benachbarten Bauteile auch die Kleberschicht selbst vorteilhaft zu einer Energieadsorption bei.

Um diese Effekte vorteilhaft zu nutzen, ist besonders bevorzugt die Kontaktfläche des Deformationselements am Karosseriebauteil zur Hauptfahrtrichtung in einem Winkel zwischen 30° und 60°, vorzugsweise zwischen 40° und 50° schräg gestellt.

Die Erfindung ist schließlich auch gezielt auf eine Verwendung eines Deformationselements an einer Karosserie eines Fahrzeugs in dessen Hauptfahrtrichtung vor und/oder hinter einem seiner Karosseriebauteile aus faserverstärktem Kunststoff gerichtet.

Besonders vorteilhaft ist eine solche Verwendung, wenn es sich bei dem Karosseriebauteil um einen Bodenschweller einer Fahrgastzelle der Karosserie handelt. Ein solcher Bodenschweller kann dann im Bereich des vorderen Radkastens und/oder des hinteren Radkastens als hinter dem Vorderrad bzw. vor dem Hinterrad des Fahrzeugs mit einem erfindungsgemäßen Deformationselement vorteilhaft geschützt werden.

Nachfolgend wird ein Ausführungsbeispiel der erfindungsgemäßen Lösung anhand der beigefügten schematischen Zeichnungen näher erläutert. Es zeigt:
- Fig. 1: eine teilweise Seitenansicht eines Ausführungsbeispiels einer erfindungsgemäßen Karosserie mit einem dortigen Deformationselement,
- Fig. 2: den Schnitt II - II in Fig. 1 und

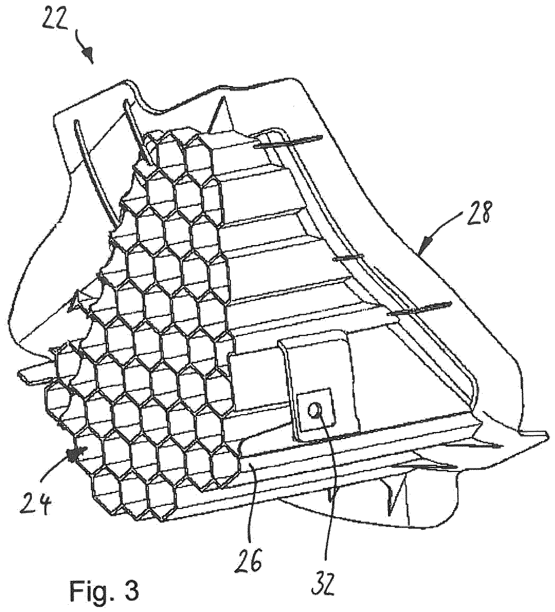

- Fig. 3: eine perspektivische Ansicht des Deformationselements gemäß Fig. 1.

Eine Karosserie 10 eines weiter nicht im Detail dargestellten Personenkraftwagens erstreckt sich längs dessen Hauptfahrtrichtung 12 und weist dabei als ein erstes Karosseriebauteil 14 einen Bodenschweller von dessen Fahrgastzelle auf.

Der Bodenschweller ist mit einem sich in Hauptfahrtrichtung 12 erstreckenden Schwellerelement 16 und einem Kopplungselement 18 am vorderen Ende des Schwellerelements 16 gestaltet. An dem Kopplungselement 18 ist eine Stirnwand der Fahrgastzelle angeschlossen, die ein zweites Karosseriebauteil 20 der Karosserie 10 bildet.

Die Karosseriebauteile 14 und 16 sind beide aus einem faserverstärktem Kunststoff, vorliegend einem kohlstofffaserverstärktem Kunststoff (CFK) hergestellt. Weitere Karosseriebauteile der Karosserie 10 sind zur Vereinfachung hier weggelassen worden.

In Hauptfahrtrichtung 12 unmittelbar vor dem Karosseriebauteil 14 ist ein Deformationselement 22 angeordnet, das nicht aus faserverstärktem Kunststoff hergestellt ist, sondern aus thermoplastischem Kunststoff, der mittels Spritzgießen verarbeitet worden ist.

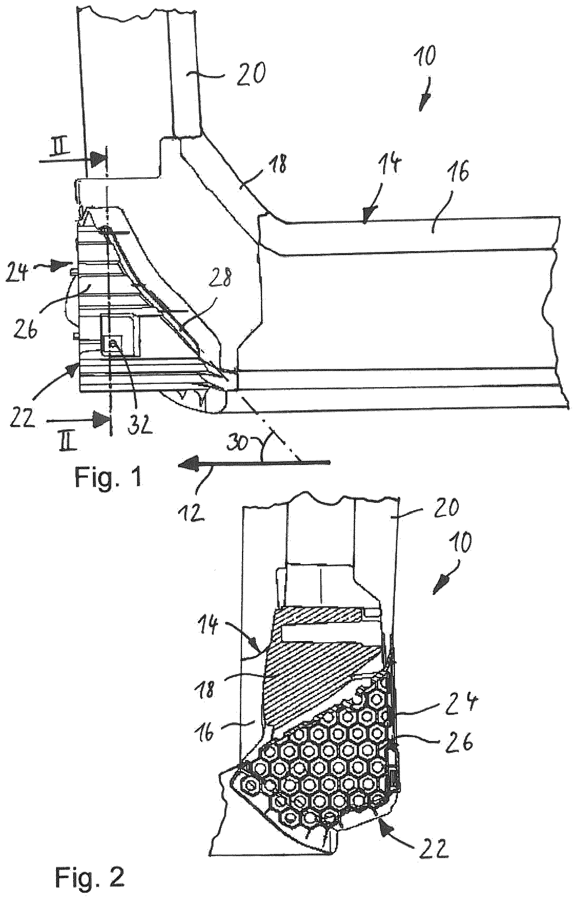

Das Deformationselement 22 ist dabei mit einer Wabenstruktur 24 gestaltet, die in der Seitenansicht betrachtet (siehe Fig. 1) eine Dreiecksform bildet, wobei weiter oben liegende Waben kürzer gestaltet sind, als weiter unten liegende Waben. An diesen Waben erstrecken sich die Wabenwände 26 in Hauptfahrtrichtung 12. Man sieht also bei dem in Fig. 2 dargestellten Schnitt in die Waben von vorne hinein.

Befestigt ist das Deformationselement 22 an dem Karosseriebauteil 14 mittels einer Kleberschicht (nicht im Detail dargestellt), die an einer Kontaktfläche 28 zwischen Deformationselement 22 und vorderem Endbereich des Karosseriebauteils 14 ausgebildet ist. Diese Kontaktfläche 28 erstreckt sich schräg zur Hauptfahrtrichtung 12 und nimmt dabei einen Winkel 30 zu dieser von ca. 45° ein.

An dem aus Kunststoff spritzgegossen Deformationselement 22 ist ferner vorteilhaft eine Halterung 32, insbesondere für eine Außenhaut der Karosserie 10 ausgebildet.

### Bezugszeichenliste

- 10: Karosserie
- 12: Hauptfahrtrichtung
- 14: Karosseriebauteil in Gestalt eines Bodenschwellers
- 16: Schwellerelement
- 18: Kopplungselement
- 20: Karosseriebauteil in Gestalt einer Stirnwand
- 22: Deformationselement
- 24: Wabenstruktur
- 26: Wabenwand
- 28: Kontaktfläche
- 30: Winkel
- 32: Halterung

## Patentansprüche

1. Karosserie (10) eines Fahrzeugs mit mindestens einem Karosseriebauteil (14) aus faserverstärktem Kunststoff, bei der in Hauptfahrtrichtung (12) des Fahrzeugs vor dem Karosseriebauteil (14) ein Deformationselement (22) angeordnet ist, **dadurch gekennzeichnet, dass** das Deformationselement (22) mit einer Wabenstruktur mit Wabenwänden (26) gestaltet ist, die in Hauptfahrtrichtung (12) ausgerichtet sind, wobei das Deformationselement (22) nicht aus faserverstärktem Kunststoff hergestellt ist.

2. Karosserie nach Anspruch 1, bei der das Deformationselement (22) an dem Karosseriebauteil (14) flächig verklebt ist.

3. Karosserie nach einem der Ansprüche 1 oder 2, bei der eine Kontaktfläche (28) des Deformationselements (22) am Karosseriebauteil (14) zur Hauptfahrtrichtung (12) schräg gestellt ist.

4. Karosserie nach Anspruch 3, bei der die Kontaktfläche (28) des Deformationselements (22) am Karosseriebauteil (14) zur Hauptfahrtrichtung (12) in einem Winkel (30) zwischen 30° und 60°, vorzugsweise zwischen 40° und 50° schräg gestellt ist.

5. Karosserie nach einem der vorhergehenden Ansprüche, wobei als Karosseriebauteil (14) ein Bodenschweller einer Fahrgastzelle der Karosserie (10) verwendet wird.

## Claims

1. Body (10) of a vehicle having at least one body component (14) made of fibre-reinforced plastic in which a deformation element (22) is arranged in front of the body component (14) in the main direction of travel (12) of the vehicle, **characterised in that**
the deformation element (22) is designed with a honeycomb structure with honeycomb walls (26) which are aligned with the main direction of travel (12), where the deformation element (22) is not made of fibre-reinforced plastic.

2. Body according to claim 1 in which the deformation element (22) is bonded flat with the body component (14).

3. Body according to claim 1 or 2, in which a contact surface (28) of the deformation element (22) is positioned diagonally to the main direction of travel (12) on the body component (14).

4. Body according to claim 3, in which the contact surface (28) of the deformation element (22) is positioned diagonally to the main direction of travel (12) on the body component (14) at an angle (30) between 30° and 60°, preferably between 40° and 50°.

5. Body according to any of the preceding claims, where a door sill of a passenger compartment of the body (10) is used as a body component (14).

## Revendications

1. Carrosserie (10) d'un véhicule ayant au moins un composant de carrosserie (14) en un matériau synthétique renforcé par des fibres,
dans lequel
un élément de déformation (22) est monté à l'avant du composant de carrosserie (14) dans la direction de déplacement principale (12) du véhicule,
**caractérisé en ce que**
l'élément de déformation (22) est conformé avec une structure en nids d'abeilles ayant des parois de nids d'abeilles (26) qui sont orientées dans la direction de déplacement principale (12), l'élément de déformation (22) n'étant pas réalisé en un matériau synthétique renforcé par des fibres.

2. Carrosserie conforme à la revendication 1,
dans laquelle
l'élément de déformation (22) et collé à plat sur le composant de carrosserie (14).

3. Carrosserie conforme à l'une des revendications 1 et 2,
dans laquelle
la surface de contact (28) de l'élément de déformation (22) avec l'élément de carrosserie (14) est oblique par rapport à la direction de déplacement principale (12).

4. Carrosserie conforme à la revendication 3,
dans laquelle
la surface de contact (28) de l'élément de déformation (22) avec la carrosserie (14) est inclinée par rapport à la direction de déplacement principale (12) selon un angle (30) compris entre 30° et 60°, de préférence entre 40° et 50°.

5. Carrosserie conforme à l'une des revendications précédentes,
dans laquelle
on utilise en tant que composant de carrosserie (14) un seuil de l'habitacle de la carrosserie (10).
